# EUROPÄISCHE PATENTANMELDUNG

(11) **EP 4 843 855 A1**
(43) Veröffentlichungstag der Anmeldung: **25.11.2026**
(21) Anmeldenummer: 26172944.6
(22) Anmeldetag: 17.04.2026
(51) Int. Cl.: B60W 30/18, B60W 30/10, B60W 30/16, B60W 30/095, B60W 30/165, B60W 60/00

(54) **STEUEREINRICHTUNG SOWIE VERFAHREN ZUR FAHRZEUGFOLGEREGELUNG**

(30) Priorität: 12.05.2025 DE 102025118110
(71) Anmelder: Bayerische Motoren Werke Aktiengesellschaft, 80809 München (DE)
(72) Erfinder: Klatt, Sven, 82110 Germering (DE); Schiano, Pierdomenico, 80935 München (DE); Stammann, Dirk, 85757 Karlsfeld (DE)

(57) **Zusammenfassung**

Steuereinrichtung zur Fahrzeugfolgeregelung für ein Fahrzeug, welches ausgelegt ist, insbesondere auf Basis von Mess- und/oder Zustandsgrößen eines Fahrzeugs, eine eigene Bahnkurve des Fahrzeugs vorauszuberechnen, wobei die Steuereinrichtung ein Erkennungssystem zur Objekterkennung aufweist, welches ausgelegt ist, der eigenen Bahnkurve zu folgen, wodurch ein Vorderfahrzeug erkannt werden kann, wobei die Steuereinrichtung ausgelegt ist, eine bestimmte Fahrsituation zu erkennen, und wobei das Erkennungssystem, wenn die bestimmte Fahrsituation erkannt ist, ausgelegt ist, die eigene Bahnkurve zu verwerfen und der Bahnkurve des Vorderfahrzeugs oder einer Referenzbahnkurve der Fahrsituation zu folgen.

## Beschreibung

Die vorliegende Erfindung betrifft eine Steuereinrichtung zur Fahrzeugfolgeregelung für ein Fahrzeug, wie beispielsweise ein Motorrad, sowie ein Verfahren zur Fahrzeugfolgeregelung.

Bei der Fahrzeugfolgeregelung wird automatisch der Abstand zu einem vorausfahrenden Fahrzeug gehalten. In bestimmten Fahrsituationen, wie beispielsweise in Kreisverkehren, stoßen die bekannten Verfahren allerdings an ihre Grenzen. Das Grundprinzip der Fahrzeugfolgeregelung basiert darauf, dass das Vorderfahrzeug vom eigenen Fahrzeug erkannt oder wahrgenommen wird. Das "Erkennungssystem" des eigenen Fahrzeugs muss hierzu entlang der (prognostizierten) Bahnkurve des eigenen Fahrzeugs schauen. Beim Durchfahren eines Kreisverkehrs kann es aber dazu kommen, dass das Vorderfahrzeug verloren wird, da es den prognostizierten Fahrschlauch verlässt. Das eigene Fahrzeug geht davon aus, dass vor ihm kein Fahrzeug mehr ist und beschleunigt. Dies kann zu kritischen Fahrsituationen führen. Gerade bei Motorrädern ist die Fahrzeugfolgeregelung schwierig umzusetzen, da je nach Geschwindigkeit die Schräglage variiert und sich damit die prognostizierte Bahnkurve ändert. Die Wahrscheinlichkeit, dass ein Vorderfahrzeug "verloren" wird, ist dann besonders hoch, da die eigene Bahnkurve aufgrund der variierenden Schräglage vom eigenen Fahrzeug oftmals falsch eingeschätzt wird.

Es ist daher eine Aufgabe der vorliegenden Erfindung, eine Steuereinrichtung sowie ein Verfahren zur Fahrzeugfolgeregelung anzugeben, welches zuverlässig auch in schwierigen Fahrsituationen, wie beispielsweise dem Durchfahren von Kreisverkehren, funktionieren.

Diese Aufgabe wird durch eine Steuereinrichtung gemäß Anspruch 1 sowie durch ein Verfahren gemäß Anspruch 10 gelöst. Weitere Vorteile und Merkmale ergeben sich aus den Unteransprüchen sowie der Beschreibung und den beigefügten Figuren.

Erfindungsgemäß ist eine Steuereinrichtung zur Fahrzeugfolgeregelung für ein Fahrzeug ausgelegt, insbesondere auf Basis von Mess- und/oder Zustandsgrößen des Fahrzeugs, eine eigene Bahnkurve des Fahrzeugs vorauszuberechnen, mit anderen Worten vorherzusagen, wobei die Steuereinrichtung ein Erkennungssystem zur Objekterkennung aufweist, welches ausgelegt ist, der eigenen Bahnkurve zu folgen, wodurch ein Vorderfahrzeug erkannt werden kann, wobei die Steuereinrichtung ausgelegt ist, eine bestimmte Fahrsituation zu erkennen, und wobei das Erkennungssystem, wenn die bestimmte Fahrsituation erkannt ist, ausgelegt ist, die eigene Bahnkurve zu verwerfen und der Bahnkurve des Vorderfahrzeugs oder einer Referenzbahnkurve der (erkannten) Fahrsituation zu folgen. Das Erkennungssystem ist ausgelegt, der eigenen Bahnkurve, auch Fahrschlauch genannt, zu folgen. Damit ist gemeint, dass es sozusagen in die Richtung der eigenen Bahnkurve "voraussieht", um dort, also im oder entlang des Fahrschlauchs, etwaige Objekte, Hindernisse oder eben ein vorausfahrendes Fahrzeug zu erkennen. In bestimmten Fahrsituationen kann es dazu kommen, dass ein bereits erkanntes Vorderfahrzeug verloren wird, weil die Mess- und/oder Zustandsgrößen des eigenen Fahrzeugs die eigene Bahnkurve nicht richtig berechnen lassen. So ein Fall kann beispielsweise beim Einfahren in einen Kreisverkehr auftreten. Beim Einfahren in einen Kreisverkehr "sehen" die bekannten Erkennungssysteme in Richtung des Mittelpunkts des Kreisverkehrs und verlieren daher das Vorderfahrzeug, welches sich bereits im Kreisverkehr befindet. Eine sichere Fahrzeugfolgeregelung ist damit nicht gewährleistet. Bei Motorrädern kommt noch erschwerend hinzu, dass die Fahrzeugneigung bei geringen Geschwindigkeiten sehr gering ist. Die Fahrzeugneigung oder auch die Rollrate des Fahrzeugs ist aber eine wichtige Größe bei der Berechnung der eigenen Bahnkurve. Diese wird aber bei niedrigen Geschwindigkeiten, wie sie im Kreisverkehr oder insbesondere auch beim Einfahren in einen Kreisverkehr auftreten, nicht richtig vorausberechnet. Vorteilhafterweise ist nun die Steuereinrichtung ausgelegt, die bestimmte Fahrsituation zu erkennen und, wenn diese erkannt ist, die eigene Bahnkurve zu verwerfen und der Bahnkurve des Vorderfahrzeugs oder einer Referenzbahnkurve der Fahrsituation zu folgen. Das Erkennungssystem folgt also nicht mehr der eigenen Bahnkurve, sondern der Bahnkurve des Vorderfahrzeugs oder der Referenzbahnkurve, die für die Fahrsituation hinterlegt ist. Beim Einfahren in einen Kreisverkehr bedeutet dies, dass das Erkennungssystem sich bereits nach rechts orientiert, während das eigene Fahrzeug vielleicht noch in Richtung des Mittelpunkts des Kreisverkehrs orientiert ist.

Gemäß einer Ausführungsform arbeitet das Erkennungssystem kamerabasiert. Zusätzlich oder alternativ können Radarsysteme oder Lidarsysteme zur Erkennung verwendet werden (Radar - Radio Detection and Ranging, Lidar - Light Detection and Ranging).

Gemäß einer Ausführungsform ist die Steuereinrichtung ausgelegt, auf Basis der erfassten Bahnkurve des Vorderfahrzeugs oder sonstiger Daten, eine Fahrsituation, insbesondere die bestimmte Fahrsituation, zu erkennen. Die sonstigen Daten sind beispielsweise Bilddaten und/oder Ortsdaten. So ist es beispielsweise möglich, dass Ortsdaten eines Satellitensystems, wie beispielsweise GPS-Daten verwendet werden, um die bestimmte Fahrsituation, wie beispielsweise einen Kreisverkehr, zu erkennen. Eine Fahrsituation, wie ein Kreisverkehr kann auch gut visuell über Bilddaten erkannt werden.

Die eigene Bahnkurve wird beispielsweise auf Basis eines Lenkwinkels erfasst. Moderne Fahrzeuge, insbesondere Zweiräder, wie Motorräder, weisen typischerweise eine Inertialsensorik auf, deren Daten vorteilhafterweise dazu herangezogen werden können, die Bahnkurve zu ermitteln. Insbesondere bei einspurigen Fahrzeugen, wie Motorrädern oder Rollern, spielt der vorgenannte Roll-/Neigungswinkel und/oder die Gierrate des Fahrzeugs eine wichtige Rolle, um die Bahnkurve zu ermitteln. Eine Mess- und/oder Zustandsgröße im Sinne der vorliegenden Anmeldung kann aber auch die derzeitige Fahrgeschwindigkeit und/oder die Beschleunigung sein etc.

Gemäß einer bevorzugten Ausführungsform ist die bestimmte Fahrsituation ein Kreisverkehr oder das Durchfahren eines Kreisverkehrs, wobei die Steuereinrichtung ausgelegt ist, die Kreisverkehrsituation daran zu erkennen, dass einem leichten Einfahrknick in eine erste Richtung eine Richtungsänderung in eine zweite Richtung erfolgt. Zweckmäßigerweise wird also die Bahnkurve des Vorderfahrzeugs dahingehend untersucht, ob sie einen leichten Einfahrknick in eine erste Richtung und eine Richtungsänderung in eine zweite Richtung aufweist. Die Steuereinrichtung ist zweckmäßigerweise ausgelegt, die Bahnkurve des Vorderfahrzeugs zu erfassen. Dies ist bei Geradeausfahrt und leichten Kurven in der Regel problemlos möglich, da das Vorderfahrzeug im eigenen Fahrschlauch liegt und damit im Bereich, den das eigene Erkennungssystem auswertet. Da die Bahnkurve des Vorderfahrzeugs ausgewertet wird, kann dieses zweckmäßigerweise hinsichtlich fahrsituationsspezifischer Fahrmanöver ausgewertet werden, wie beispielsweise hinsichtlich des vorgenannten leichten Einfahrknicks, gefolgt von einer Richtungsänderung, wie sie beim Einfahren in einen Kreisverkehr stattfindet.

Ist die (bestimmte) Fahrsituation, wie beispielsweise der Kreisverkehr, erkannt, folgt das Erkennungssystem nicht mehr der eigenen Bahnkurve oder einer zumindest angenommenen Bahnkurve des Vorderfahrzeugs. Der Ausdruck "angenommene Bahnkurve" ist dahingehend zu verstehen, dass die Steuereinrichtung zweckmäßigerweise Trainingsdaten enthält, welche typische Bahnkurven spezifischer Fahrsituationen bereitstellt.

Zweckmäßigerweise umfasst die Referenzbahnkurve eine Kurvenschar, welche die bestimmte Fahrsituation repräsentiert. Zweckmäßigerweise ist die Steuereinrichtung ausgelegt, die verschiedenen Fahrsituationen zu erkennen. Für jede Fahrsituation können beispielsweise eine Vielzahl von Fahr- oder Kurvenlinien (vergleiche die vorgenannte Kurvenschar) hinterlegt sein, welche aus Trainingsdaten stammen. Zum Aufbau einer Datenbasis können Verfahren des maschinellen Lernens verwendet werden. Die aktuell erfasste Bahnkurve kann zweckmäßigerweise auch dazu verwendet werden, die Datenbasis, also die Vielzahl von Kurvenlinien bzw. die Kurvenschar, weiter auszubauen.

Gemäß einer Ausführungsform ist die Steuereinrichtung ausgelegt, die Bahnkurve des Vorderfahrzeugs mit der Referenzbahnkurve abzugleichen, wodurch die bestimmte Fahrsituation bestätigt werden kann. Zweckmäßigerweise wird die Bahnkurve des Vorderfahrzeugs so lange nicht verworfen, solange die vom Erkennungssystem erlernten Kurvenlinien verschiedener Kreisverkehre oder - allgemeiner - Fahrsituationen korrekt erkannt werden. Gemäß einer Ausführungsform ist die Steuereinrichtung ausgelegt, an der Betätigung des eigenen Blinkers zu erkennen, dass die erkannte Fahrsituation verlassen wird. Die Blinker-Erkennung des Fahrzeugs ermöglicht beispielsweise das Verlassen des Kreisverkehrs. Die Steuereinrichtung ist gemäß einer Ausführungsform ausgelegt, bis zum Verlassen des Kreisverkehrs eine angemessene Geschwindigkeit oder auch Beschleunigung beizubehalten, um ein komfortables Verlassen des Kreisverkehrs zu ermöglichen bzw. einen Abstand zum erkannten Vorderfahrzeug zu halten.

Gemäß einer Ausführungsform ist die Steuereinrichtung ausgelegt, die erfasste Bahnkurve des Vorderfahrzeugs zu speichern und zum Optimieren oder Ausbauen der Referenzbahnkurve zu verwenden.

Beginnt das Vorderfahrzeug im Kreisverkehr zu beschleunigen, ist die Steuereinrichtung gemäß einer Ausführungsform ausgelegt, auf Basis des Lenkwinkels, des Rollradius oder der Schräglage des eigenen Fahrzeugs eine für den Fahrer angemessene und sichere Kurvengeschwindigkeit einzustellen.

Zweckmäßigerweise ist die Steuereinrichtung ausgelegt, in der bestimmten Fahrsituation eine Referenzgeschwindigkeit und/oder die Fahrgeschwindigkeit des Vorderfahrzeugs zum Regeln der eigenen Geschwindigkeit zu verwenden.

Die Erfindung richtet sich auch auf ein Verfahren zur Fahrzeugfolgeregelung, welches die folgenden Schritte umfasst:
- Bereitstellen eines Erkennungssystems, welches ausgelegt ist, einer Bahnkurve des eigenen Fahrzeugs zu folgen;
- Erfassen eines Vorderfahrzeugs mit dem Erkennungssystem;
- Erkennen einer bestimmten Fahrsituation;
- Folgen der Bahnkurve des Vorderfahrzeugs oder einer Referenzbahnkurve der Fahrsituation, wenn die bestimmte Fahrsituation erkannt ist.

Für das Verfahren gelten die im Zusammenhang mit der Steuereinrichtung erwähnten Vorteile und Merkmale analog und entsprechend.

Fahrzeuge der in Rede stehenden Art sind insbesondere Kraftfahrzeuge, seien es Personenkraftwaren, aber insbesondere auch ein- oder mehrspurige Krafträder, wie Motorräder. Interessant ist das Verfahren insbesondere für einspurige Fahrzeuge, wie Motorräder oder Roller, da die Steuereinrichtung bzw. das Verfahren auch dann sicher funktionieren, wenn die eigene Bahnkurve gegebenenfalls nicht mit höchster Genauigkeit berechnet werden kann, wie dies bei einspurigen Fahrzeugen der Fall ist, wenn sie bei Kurvenfahrt sehr langsam bewegt werden.

Weitere Vorteile und Merkmale ergeben sich aus der nachfolgenden Beschreibung einer Steuereinrichtung bzw. eines Verfahrens mit Bezug auf die beigefügten Figuren.

Es zeigen:
- Fig. 1:: eine schematische Ansicht eines Kreisverkehrs in einer Draufsicht zu einem ersten Zeitpunkt;
- Fig. 2:: zeigt die aus der Fig. 1 bekannte Skizze zu einem zweiten, späteren Zeitpunkt.

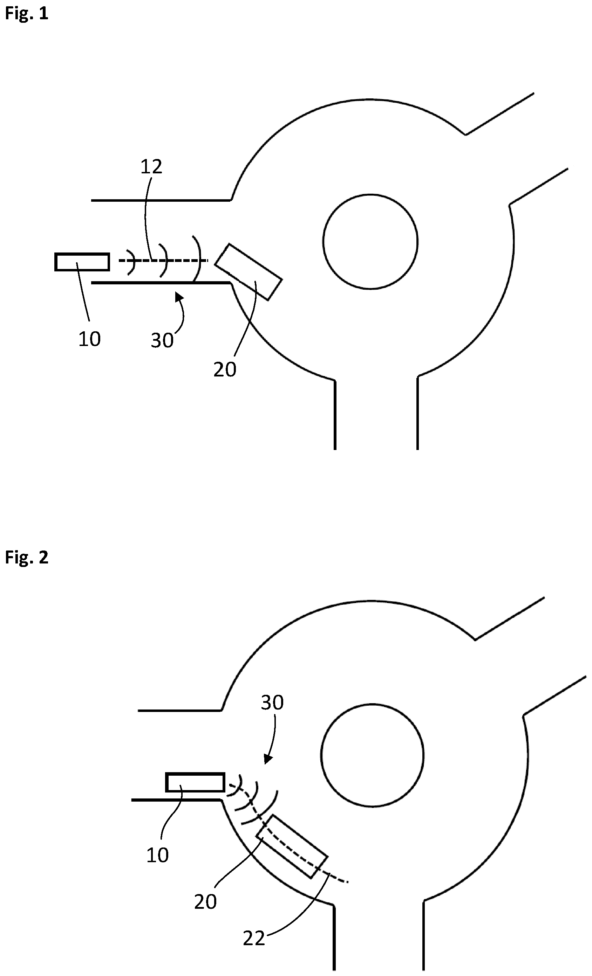

**Fig. 1** zeigt in einer Draufsicht schematisch einen Kreisverkehr. Zu erkennen ist ein Fahrzeug 10, wobei es sich bei diesem beispielsweise um ein Motorrad handelt.

Dieses fährt zu dem hier gezeigten Zeitpunkt auf einen Kreisverkehr zu. Die eigene Bahnkurve 12 ist daher gerade und in etwa auf einen Mittelpunkt des Kreisverkehrs gerichtet. Ein Vorderfahrzeug 20 biegt gerade in den Kreisverkehr ein. Mit dem Bezugszeichen 30 ist ein Erkennungssystem bzw. der Bereich, der von dem Erkennungssystem erfasst wird, skizziert. Das Vorderfahrzeug 20 liegt noch im Bereich der Erfassung des Erkennungssystems, sodass beispielsweise ein leichter Einfahrknick (vorliegend nach rechts) und die sich anschließende Richtungsänderung (vorliegend nach links) des Vorderfahrzeugs 20 erkannt werden können. Eine Steuereinrichtung des Fahrzeugs ist zweckmäßigerweise ausgelegt, anhand dieses Fahrmanövers die Kreisverkehrssituation zu erkennen. Alternativ oder zusätzlich ist die Steuereinrichtung ausgelegt, GPS-Daten auszuwerten oder visuelle Informationen, beispielsweise wenn das Fahrzeug 10 mit entsprechenden Kameras ausgerüstet ist, zu nutzen. Ist die bestimmte Fahrsituation, wie beispielsweise vorliegend das Durchfahren des Kreisverkehrs erkannt, kann das Erkennungssystem die eigene Bahnkurve 12 verwerfen und der Bahnkurve des Vorderfahrzeugs oder einer Referenzbahnkurve der Fahrsituation folgen. Dies bedeutet, dass das Erkennungssystem einer Bahnkurve 22 des Vorderfahrzeugs 20 folgt und nicht mehr der eigenen Bahnkurve 12, vergleiche diesbezüglich insbesondere die Fig. 2.

**Fig. 2** zeigt die aus der Fig. 1 bekannte Skizze, allerdings zu einem etwas späteren Zeitpunkt. Das eigene Fahrzeug 10 steht hier noch am Eingang des Kreisverkehrs. Normalerweise würde das Erkennungssystem 30, da das Fahrzeug hier noch gerade steht und gegebenenfalls auch noch nicht einlenkt bzw. im Fall eines einspurigen Fahrzeuges so gut wie keine Schräglage aufweist, etwa auf den Mittelpunkt des Kreisverkehrs "zielen", vgl. diesbezüglich auch die Figur 1. Stattdessen folgt es vorliegend vorteilhafterweise der Bahnkurve 22 des Vorderfahrzeugs 20. Damit kann eine sichere Fahrzeugfolgeregelung auch beim Durchfahren des Kreisverkehrs realisiert werden. Würde das Erkennungssystem in Richtung des Mittelpunkts des Kreisverkehrs zeigen, würde es fälschlicherweise annehmen, dass kein vorausfahrendes Fahrzeug vorhanden ist und es würde ein Beschleunigungsvorgang eingeleitet werden, welcher den Fahrer überraschen würde. Stattdessen wird vorteilhafterweise einer Bahnkurve 22 des Vorderfahrzeugs 20 gefolgt. Zusätzlich oder alternativ kann auch einer Referenzbahnkurve gefolgt werden, welche für die entsprechende Fahrsituation, wie hier den Kreisverkehr, hinterlegt ist. Damit kann, insbesondere auch, wenn ein vorausfahrendes Fahrzeug zumindest kurzfristig verloren wird oder gar nicht vorhanden ist, der Kurvenverlauf des Kreisverkehrs prognostiziert werden. Damit wird sichergestellt, dass das Erkennungssystem entlang der richtigen Richtung "erfasst". Das Vorderfahrzeug wird so lange nicht verworfen, solange die vom Erkennungssystem gelernten Kurvenlinien verschiedener Kreisverkehre korrekt erkannt werden. Beginnt das Vorderfahrzeug zu beschleunigen, wird auf Basis des Lenkwinkels, des Rollradius und/oder der Schräglage etc. des Fahrzeugs 10 eine für den Fahrer angemessene und sichere Kurvengeschwindigkeit vorhergesagt und eingestellt. Eine Blinker-Erkennung des Fahrzeugs 10 ermöglicht mit Vorteil das Verlassen des Kreisverkehrs. Bis der Kreisverkehr verlassen wurde, wird zweckmäßigerweise eine angemessene Beschleunigung beibehalten, um ein komfortables Verlassen des Kreisverkehrs zu ermöglichen.

### Bezugszeichenliste

- 10: Fahrzeug
- 12: Eigene Bahnkurve
- 20: Vorderfahrzeug
- 22: Bahnkurve Vorderfahrzeug
- 30: Erkennungssystem

## Patentansprüche

1. Steuereinrichtung zur Fahrzeugfolgeregelung für ein Fahrzeug,
welches ausgelegt ist, insbesondere auf Basis von Mess- und/oder Zustandsgrößen eines Fahrzeugs, eine eigene Bahnkurve (12) des Fahrzeugs (10) vorauszuberechnen,
wobei die Steuereinrichtung ein Erkennungssystem zur Objekterkennung aufweist, welches ausgelegt ist, der eigenen Bahnkurve (12) zu folgen, wodurch ein Vorderfahrzeug (20) erkannt werden kann,
wobei die Steuereinrichtung ausgelegt ist, eine bestimmte Fahrsituation zu erkennen, und
wobei das Erkennungssystem, wenn die bestimmte Fahrsituation erkannt ist, ausgelegt ist, die eigene Bahnkurve (12) zu verwerfen und der Bahnkurve (22) des Vorderfahrzeugs (20) oder einer Referenzbahnkurve der Fahrsituation zu folgen.

2. Steuereinrichtung nach Anspruch 1,
wobei die Steuereinrichtung ausgelegt ist, auf Basis der erfassten Bahnkurve (22) des Vorderfahrzeugs (20) oder sonstiger Daten, eine Fahrsituation zu erkennen.

3. Steuereinrichtung nach Anspruch 2,
wobei die sonstigen Daten Bilddaten und/oder Ortsdaten sind.

4. Steuereinrichtung nach einem der vorhergehenden Ansprüche,
wobei die bestimmte Fahrsituation ein Kreisverkehr oder das Durchfahren eines Kreisverkehrs ist, und
wobei die Steuereinrichtung ausgelegt ist, die Kreisverkehrsituation daran zu erkennen, dass einem leichten Einfahrknick in eine erste Richtung eine Richtungsänderung in eine zweite Richtung folgt.

5. Steuereinrichtung nach einem der vorhergehenden Ansprüche,
wobei die Referenzbahnkurve eine Kurvenschar umfasst, welche die bestimmte Fahrsituation repräsentiert.

6. Steuereinrichtung nach einem der vorhergehenden Ansprüche,
wobei die Steuereinrichtung ausgelegt ist, die erfasste Bahnkurve (22) des Vorderfahrzeugs (20) zu speichern und zum Optimieren oder Ausbauen der Referenzbahnkurve zu verwenden.

7. Steuereinrichtung nach Anspruch 6,
wobei die Steuereinrichtung ausgelegt ist, die Bahnkurve (22) des Vorderfahrzeugs (20) mit der Referenzbahnkurve abzugleichen, wodurch die bestimmte Fahrsituation bestätigt werden kann.

8. Steuereinrichtung nach einem der vorhergehenden Ansprüche,
welche ausgelegt ist, an der Betätigung des Blinkers des Fahrzeugs zu erkennen, dass die bestimmte Fahrsituation verlassen wird.

9. Steuereinrichtung nach einem der vorhergehenden Ansprüche,
welche ausgelegt ist, in der bestimmten Fahrsituation eine Referenzgeschwindigkeit und/oder die Fahrgeschwindigkeit des Vorderfahrzeugs (20) zum Regeln der eigenen Geschwindigkeit zu verwenden.

10. Verfahren zur Fahrzeugfolgeregelung,
umfassend die Schritte:
- Bereitstellen eines Erkennungssystems, welches ausgelegt ist, einer Bahnkurve (12) des eigenen Fahrzeugs (10) zu folgen;
- Erfassen eines Vorderfahrzeugs (20) mit dem Erkennungssystem;
- Erkennen einer bestimmten Fahrsituation;
- Folgen der Bahnkurve (22) des Vorderfahrzeugs (20) oder einer Referenzbahnkurve der Fahrsituation, wenn die bestimmte Fahrsituation erkannt ist.
